Europäisches Patentamt

European Patent Office

Office européen des brevets

(19)

(11) Publication number: **0 500 954 A1**

# EUROPEAN PATENT APPLICATION
## published in accordance with Art. 158(3) EPC

(21) Application number: 91915615.8

(22) Date of filing: **06.09.91**

(86) International application number:
**PCT/JP91/01188**

(87) International publication number:
**WO 92/04759 (19.03.92 92/07)**

(51) Int. Cl.⁵: **H02K 5/22**

(30) Priority: **06.09.90 JP 234559/90**

(43) Date of publication of application:
**02.09.92 Bulletin 92/36**

(84) Designated Contracting States:
**DE IT**

(71) Applicant: **FANUC LTD.**
**3580, Shibokusa Aza-Komanba, Oshino-mura**
**Minamitsuru-gun, Yamanashi 401-05(JP)**

(72) Inventor: **NAKAMURA, Kosei, Fanuc Dai-3**
**Vira-karamatsu**
**3527-14 Shibokusa, Oshino-mura**
**Minamitsuru-gun, Yamanashi 01-05(JP)**
Inventor: **KATSUZAWA, Yukio**
**1915-5, Funatsu, Kawaguchikomachi**
**Minamitsuru-gun, Yamanashi 401-03(JP)**
Inventor: **MAEDA, Yoshinobu, Fanuc Mansion**
**Harimomi 9-301**
**3533-2, Shibokusa, Oshino-mura**
**Minamitsuru-gun, Yamanashi 401-05(JP)**

(74) Representative: **Otte, Peter, Dipl.-Ing. et al**
**Tiroler Strasse 15**
**W-7250 Leonberg(DE)**

(54) **EXTERNAL TERMINAL OF MOTOR.**

(57) An external terminal for connecting a winding on a stator of a motor, wherein a winding terminal portion can be automatically fit to a terminal table by an automatic machine such as a robot. To accomplish this object, the present invention provides an external terminal including a terminal table (24) fixed to a housing external surface of a motor, a relay member (20) fixedly disposed near an opening (14a) bored in the housing in the proximity of the terminal table, a plurality of relay terminals (22) disposed in the relay member and capable of fixing the wire end portion of a winding, and a conductor member (26) fitted at one of its ends to the relay terminals and at the other end, to the terminal table through the opening, and capable of being connected to an external cable on the terminal table. According to this external terminal, the fitting portions of the conductor member (26) on the terminal table (24) and the fitting portion on the conductor member (26) can be fixedly disposed.

# Fig. 1

## TECHNICAL FIELD

The present invention relates to an outer terminal of an electric motor, for connecting coils wound on a stator of the motor to cables arranged outside of the motor.

## BACKGROUND ART

For connecting coils wound on and provided for a stator of the motor to outside input or output cables, the method generally used is to connect the input or output cables to an outer terminal provided for the motor, the outer terminal being constructed by fixing a terminal box including a terminal block to a housing of the motor, and directly connecting the terminal block with screw terminals or pins previously press-fitted with end portions of the coils.

In this method, however, when terminal sections of the coils each having the above-described screw terminal or pin are fitted with the terminal block in the last stage of the process for assembling the motor, the end portions of a plurality of the terminal sections are not fixedly positioned, and thus each of the terminal sections of the coils is separated one from the other. Therefore, the method has difficulty in providing an automatic operation of the process for fitting the separated terminal sections of the coils with the terminal block, by an automatic machine such as a robot.

## DISCLOSURE OF THE INVENTION

An object of the present invention is to provide, in an outer terminal of the motor for connecting the coils wound on the stator of the motor to cables arranged outside thereof, an outer terminal in which the terminal sections of the coils can be automatically fitted with the terminal block by an automatic machine such as a robot.

To accomplish the above object, the present invention provides an outer terminal of an electric motor formed at a plurality of wire-end portions of coils wound on a stator core of the motor, for establishing an electrical connection with outside cables, characterized in that the outer terminal comprises a terminal block fixed to an outer surface of a motor housing, a relay member fixedly arranged within the housing in the vicinity of an aperture cut through the housing and adjacent to the terminal block, a plurality of relay terminals provided for the relay member, to which the wire-end portions of coils can be fixed, and an electrical conductive member fitted at one end with the relay terminals and at the other end with the terminal block and passing through the aperture, to thereby constitute a connecting terminal section connectable to the outside cables on the terminal block, and in that each fitted position of the electrical conductive member on each of the terminal block and the relay terminals are fixedly arranged, respectively.

According to the present invention, in the assembling process for the motor, the wire-end portions of coils are fixed on the relay terminals of the relay member, and the relay member is then in turn fixed in the aperture of the housing, and thus each fitted position of the electrical conductive member on each of the terminal block and the relay terminals are fixedly arranged with respect to the housing, respectively, and thus the terminal sections of the coils can be automatically connected to the terminal block by using an automatic machine such as a robot.

## BRIEF DESCRIPTION OF THE DRAWINGS

Fig. 1 is a partial vertical section showing an outer terminal according to the present invention;

Fig. 2 is a transverse section taken along the line II-II in Fig. 4, showing the outer terminal according to the present invention;

Fig. 3 is a plan view of a part of the outer terminal according to the present invention, seen from arrow III in Fig. 4; and

Fig. 4 is a vertical section through a stator and a housing of an electric motor including the outer terminal according to the present invention.

## BEST MODE OF CARRYING OUT THE INVENTION

The present invention will be described in more detail, based on an embodiment shown in the attached drawings.

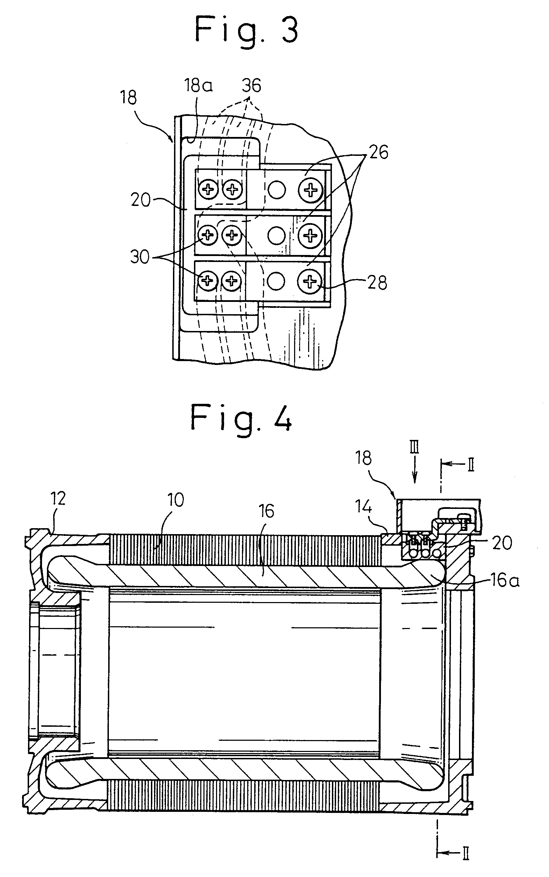

As shown in Fig. 4, a front housing 12 and a rear housing 14 are fitted with a front end and a rear end of a stator core 10 arranged at the outer periphery of the motor, respectively, the front housing 12 including a fitted end for a counterpart machine to be driven, and the rear housing 14 holding the stator core 10 between the front housing 12 and the rear housing 14. Coils 16 are wound on the stator core 10. A terminal box 18 and a relay member 20, as mentioned below, are fitted to the upper portion of the rear housing 14. The terminal box 18 and the relay member 20 are both made of an electric insulating material.

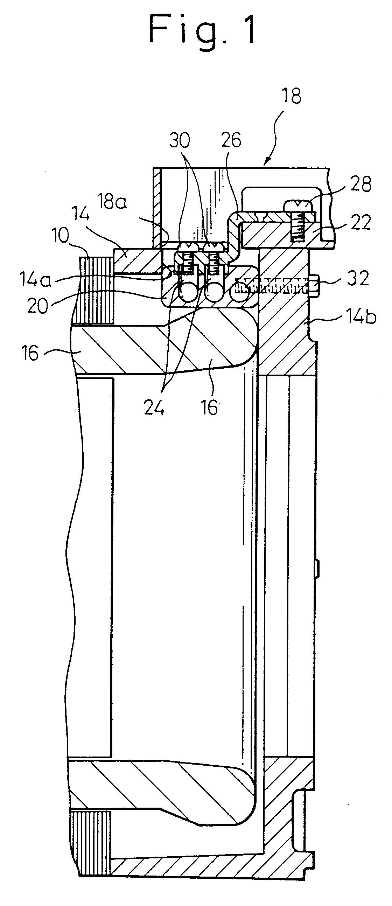

As shown in Figs. 1 to 3, the terminal box 18 has an opening 18a in the bottom portion thereof and an electric insulating terminal block 22 integrated with the bottom portion adjacent to the opening 18a. The terminal box 18 is fixed on the upper portion of the rear housing 14 so that the opening 18a of the bottom portion matches an aperture 14a provided on a selected upper position of a peripheral wall of the rear housing 14. The terminal block 22 of the terminal box 18 fixedly supports a plurality of electrical conductive plates 26 connected to a plurality of relay terminals 24 of the relay member 20, as mentioned below. Each electrical conductive plate 26 is made of an electrical conductive metal plate, and constitutes a connecting terminal section of the motor on the terminal block 22 to be connected to outside input or output cables (not shown). Threaded holes 22a and 24a for fixing the electrical conductive plates 26 are formed within the terminal block 22 and the relay terminals 24 of the relay member 20, respectively, and the electrical conductive plates 26 are fixed at each end thereof to the threaded holes 22a and 24a by screws 28 and 30, respectively.

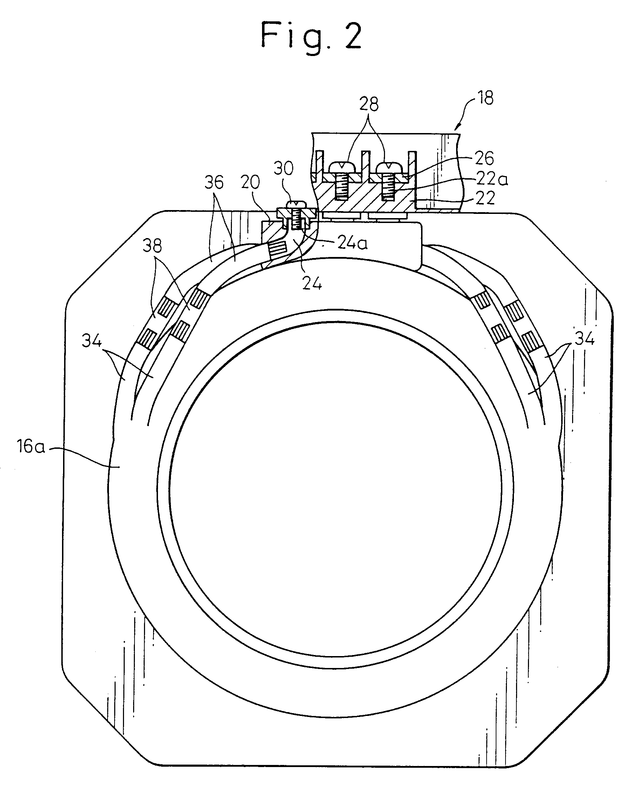

As described above, the relay member 20 relays the connection between the connecting terminal section of the motor arranged on the terminal box 18, i.e., the electrical conductive plates 26 fixed to the terminal block 22, and wire-end portions of the coils 16. As shown in Fig. 1, the relay member 20 is fixed to the rear wall 14b of the rear housing 14 by a screw 32, so as to be housed within the aperture 14a of the rear housing 14 at a position over the coil-ends 16a of the coils 16. As shown in Figs. 1 and 2, the relay member 20 has a plurality of relay terminals 24 for relaying the connection between the wire-end portions 34 of the coils 16 and the electrical conductive plates 26, and after connecting short conduct-wires 36 to each of the relay terminals 24, is molded by a resin material to thus embed the relay terminals 24 and the conduct-wires 36 therein. The conduct-wires 36 of the relay member 20 are connected and press-fitted to the wire-end portions 34 arranged at the coil-ends 16a of the coils 16, via press-fitted tubes 38.

In the connecting construction having the above-mentioned constitution, after the completion of the operation for winding the coils 16 on the stator core 10, first the wire-end portions 34 of the coils 16 are connected and press-fitted to the conduct-wires 36 of the relay member 20 via the press-fitted tubes 38, then the relay member 20 is housed within the aperture 14a of the rear housing 14, and the front housing 12 and the rear housing 14 are assembled together with the stator core 10, next the position and posture of the relay member 20 is adjusted via the aperture 14a, and the relay member 20 is fixed by screws 32 via threaded holes provided in the rear wall 14b of the rear housing 14, and in the final stage of the assembling process of the motor, the terminal box 18 integrally including the terminal block 22 is fixed to the rear housing 14 so that each of the relay terminals 24 of the relay member 20 is positioned beneath the opening 18a of the bottom portion of the terminal box 18. Thereafter, each of the relay terminals 24 of the relay member 20 is connected to the terminal block 22 via the plurality of electrical conductive plates 26. In the above operations, when each of the electrical conductive plates 26 is connected to both the terminal block 22 and the each relay terminal 24 of the relay member 20 by screws 28 and 30, respectively, the threaded holes 22a provided in the terminal block 22 and the threaded holes 24a provided in the top of each of the relay terminals 24 are arranged at fixed positions visible from above the terminal box 18. Thus, by inputting the data of the position of each of the threaded holes 22a and 24a, an automatic machine, such as a robot, can perform the operation for engaging and screwing the screws 28 and 30 with the threaded hole 22a and 24a, whereby the fitting operation is automated.

In the above-mentioned embodiment, the terminal box 18 and the relay member 20 are fitted to the rear housing 14, but they may be fitted to the front housing 12.

As clear from the above explanations, according to the present invention, because a plurality of wire-end portions of the coils wound on the stator core are connected to the relay member fixed to the housing, the process for establishing the outer terminal by connecting the wire-end portions to the terminal block of the terminal box, which is also fixed to the housing, via the electrical conductive plate can be automated by using an automatic machine such as a robot.

LIST OF REFERENCE NUMERALS

| | |
|---|---|
| 10 | stator core |
| 12 | front housing |
| 14 | rear housing |
| 14a | aperture |
| 16 | coil |
| 18 | terminal box |
| 20 | relay member |
| 22 | terminal block |
| 24 | relay terminal |
| 26 | electrical conductive plate |
| 28, 30, 32 | screw |
| 34 | wire-end portion |
| 36 | conduct-wire |
| 38 | press-fitted tube |

**Claims**

1. An outer terminal of an electric motor formed at a plurality of wire-end portions of coils wound on a stator core of the motor, for establishing an electrical connection with outside cables;

characterized in that said outer terminal comprises:

a terminal block fixed to an outer surface of a motor housing;

a relay member fixedly arranged within said housing in the vicinity of an aperture cut through said housing and adjacent to said terminal block;

a plurality of relay terminals provided for said relay member, to which the wire-end portions of coils can be fixed; and

an electrical conductive member fitted at one end with said relay terminals and at the other end with said terminal block, and passing through said aperture, to thereby constitute a connecting terminal section connectable to the outside cables on said terminal block;

and in that each fitted position of said electrical conductive member on each of said terminal block and said relay terminals are fixedly arranged, respectively.

2. An outer terminal as set forth in claim 1, wherein said terminal block is arranged at a rear end of the motor housing, and said relay member is fitted within and fixed to said aperture cut through said housing adjacent to said terminal block.

3. An outer terminal as set forth in claim 1, wherein said electrical conductive member consists of a plurality of electrical conductive metal plates fitted at one end to each of said relay terminals.

4. An outer terminal as set forth in claim 1, wherein said relay member is a molded product of resin material molded so as to embed therein said relay terminals and a plurality of conductive wires connected to each of said relay terminals.

5. An outer terminal as set forth in claim 4, wherein said conductive wires embedded within said relay member are connected with the wire-end portions of coils via press-fitted tubes.

# Fig. 1

# Fig. 2

# Fig. 3

# Fig. 4

## INTERNATIONAL SEARCH REPORT

International Application No PCT/JP91/01188

**I. CLASSIFICATION OF SUBJECT MATTER** (if several classification symbols apply, indicate all) [6]

According to International Patent Classification (IPC) or to both National Classification and IPC

Int. Cl$^5$  H02K5/22

**II. FIELDS SEARCHED**

| Minimum Documentation Searched [7] | |
|---|---|
| Classification System | Classification Symbols |
| IPC | H02K5/22 |

| Documentation Searched other than Minimum Documentation to the Extent that such Documents are Included in the Fields Searched [8] |
|---|
| Jitsuyo Shinan Koho        1922 – 1991 <br> Kokai Jitsuyo Shinan Koho   1972 – 1991 |

**III. DOCUMENTS CONSIDERED TO BE RELEVANT [9]**

| Category [*] | Citation of Document, [11] with indication, where appropriate, of the relevant passages [12] | Relevant to Claim No. [13] |
|---|---|---|
| Y | JP, U, 59-114753 (Hitachi, Ltd.), <br> August 2, 1984 (02. 08. 84), <br> (Family: none) | 1-5 |
| Y | JP, U, 01.101148 (Matsushita Electric <br> Ind. Co., Ltd.), <br> July 7, 1989 (07. 07. 89), <br> (Family: none) | 1-5 |
| Y | JP, B1, 47-1968 (Matsushita Electric <br> Ind. Co., Ltd.), <br> January 20, 1972 (20. 01. 72), <br> (Family: none) | 1-5 |

* Special categories of cited documents: [10]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

**IV. CERTIFICATION**

| Date of the Actual Completion of the International Search | Date of Mailing of this International Search Report |
|---|---|
| November 26, 1991 (26. 11. 91) | December 17, 1991 (17. 12. 91) |
| International Searching Authority | Signature of Authorized Officer |
| Japanese Patent Office | |

Form PCT ISA 210 (second sheet) (January 1985)